# EUROPEAN PATENT APPLICATION

(11) **EP 1 298 095 A1**
(43) Date of publication of application: **02.04.2003**
(21) Application number: 01920018.7
(22) Date of filing: 19.03.2001
(51) Int. Cl.: C03B 19/09

(54) **METHOD FOR CONTINUOUS PRODUCTION OF DECORATIVE FACING SLABS DEVICE FOR CARRYING OUT SAID METHOD, DECORATIVE FACING MATERIAL**

(30) Priority: 15.05.2000 RU 2000111685; 01.11.2000 RU 2000127343
(71) Applicant: Reznik, Valentin Jurievich, Moscow, 109388 (RU); Akhapkin, Konstantin Viktorovich, Moscow, 129224 (RU); Grischenko, Sergei Evgenievich, Moscow, 119501 (RU); Meleshko, Viktor Mikhailovich, Moscow, 123310 (RU); Shitueva, Irina Vladimirovna, Moscow, 113648 (RU)
(72) Inventor: Reznik, Valentin Jurievich, Moscow, 109388 (RU); Akhapkin, Konstantin Viktorovich, Moscow, 129224 (RU); Grischenko, Sergei Evgenievich, Moscow, 119501 (RU); Meleshko, Viktor Mikhailovich, Moscow, 123310 (RU); Shitueva, Irina Vladimirovna, Moscow, 113648 (RU)
(74) Representative: HOFFMANN - EITLE
(86) International application number: RU0100111
(87) International publication number: WO01087784

(57) **Abstract**

The invention relates to the production of decorative facing materials using a glass-pelletizer and refractory filler. The inventive method for a continuous production of decorative facing slabs consists in loading of basic materials into casting-moulds which are placed on an open heat-insulated palette, and in thermal treatment in a furnace at a temperature ranging from 900°C to 950°C. After the thermal treatment, the palette with the moulds is taken out and conditioned at an ambient temperature during 80-90 sec accompanied by cooling the surface of the slabs to a temperature ranging from 600°C to 634°C. Afterwards, the slabs are placed in a heat-insulated closed space having a thermal resistance of walls which makes it possible to cool the surface of the slab to a temperature ranging from 100°C to 140°C with an average cooling rate ranging from 0.016 to 0.020 degrees/sec.

## Description

### Field of the Invention

The invention relates to the production of decorative facing materials based on glass pelletizer and refractory filler and, in particular, to a method for continuous production of decorative facing slabs and a device for carrying out said method as well as to a decorative facing material.

### State of the Art

A method is known to be used for continuous production of decorative facing slabs based on colour glass pelletizer and refractory filler, for instance, quartz sand, the method including laying basic materials layer by layer into a casting mould, followed by thermal treatment to fuse, bake and fire them in a tunnel furnace (USSR Inventor's Certificate No. 1546442, Cl. C03B 31/00, publ. 1990).

A disadvantage of the known method consists in low quality of the resulting slabs, and namely: warping and cracking caused by substantial temperature differences with depth and over the surfaces of slabs in the tunnel furnace and by drawing cold air into it.

The closest prior art with respect to the method of the invention as far as the technical substance and the result attainable thereby are concerned, is represented by a method for production of decorative facing slabs based on colour glass pelletizer and refractory filler, such as quartz sand, the method including: loading basic materials into casting moulds, followed by thermal treatment in a furnace at a temperature of 900°C to 950°C to fuse, bake and crystallize them, with the temperature being reduced prior to firing, down to 700-650°C in 2 to 8 minutes, i.e. at an average rate of 0.85 deg/sec, followed by firing from 650°C to 450°C which is carried out for as long as 30 to 40 minutes, i.e. at an average rate of 0.097 deg/sec, and then within a temperature range from 450°C to 50°C for as long as 10 to 15 minutes, i.e. at an average rate of 0.555 deg/sec (USSR Inventor's Certificate No. 925883, Cl. C03B 31/00, publ. 1982).

Disadvantages of the known method for production of decorative facing slabs consist in low quality of firing the slabs because of a high cooling rate leading to large temperature differences both in depth and over the surfaces of slabs both in the process of firing (with residual stresses occuring in the material) and in the process of further cooling (with temporary stresses occuring therein). Besides, a low cooling rate at an initial stage (prior to firing) leads to additional influence of high temperatures upon the casting moulds, thus causing their deformation and affecting quality of the slabs because of their greater variable thickness differences and flatness errors.

A device is known to be used for continuous production of decorative facing slabs based on colour glass pelletizer and refractory filler, such as quartz sand, the device comprising a tunnel furnace with heating, firing and cooling zones, the furnace being provided with a roller conveyor for conveying casting moulds with a basic material (USSR Inventor's Certificate Specification No. 1546442, Cl. C03B 31/00, publ. 1990). Disadvantages of the known device consist in substantial power intensity and considerable specific consumption of materials and low quality of products because of drawing cold air into it and deformation of casting moulds and roller conveyor caused by prolonged exposure to high temperatures.

The closest prior art with respect to the device of the invention as far as the technical substance and the result attainable thereby are concerned, is represented by a device for continuous production of decorative facing slabs based on colour glass pelletizer and refractory filler, such as quartz sand, the device comprising a bell furnace, casting moulds placed into heat-insulated pallets provided with heat-insulated covers forming, in contact with each other, a tight connection, a means for step-by-step conveying of the pallets, and a mechanism for forcing them against the bell furnace (Patent RU No. 2004507, Cl. C03B 31/00, publ. 1993).

Disadvantages of the known device for production of decorative facing slabs consist in:
large temperature differences both in depth and over the surfaces of the slabs because of a high cooling rate when firing the slabs and after their firing as well as uncontrollable temperature differences because of drawing cold air in (if the covers get deformed), fringe effects and heating effect of the pallets on each other, hence impairing firing and reducing the percentage of usable products yielded; and
deformation of the pallets and covers because of mechanical and prolonged high-temperature exposures, hence reducing a service life of equipment and affecting quality of the slabs (increasing their variable thickness differences and flatness errors).

A multilayer decorative facing material is known to be produced on the base of colour glass pelletizer and refractory filler, the material containing waste optical glass as the glass pelletizer, and the percentage of quartz sand as the refractory filler in the structural, lower layer is 26 to 34 wt.% (USSR Inventor's Certificate No. 1806107, Cl. C03C 14/00, publ. 1993).

The known material has reduced mechanical properties and, in particular, high abradability.

The closest prior art with respect to the material of the invention as far as the technical substance and the result attainable thereby are concerned, is represented by a multilayer decorative facing material based on colour glass pelletizer and refractory filler, produced in accordance with granule-powder technology, by a baking method, followed by crystallization and burning, the material including a structural layer of a mixture of glass pelletizer and refractory filler, with the contents of refractory filler being 0 to 14.7 wt.%, and a decorative layer 3 mm to 7 mm thick consisting of colour glass pelletizer (U.S. Patent No. 5,649,987, Cl. 65/17,5, publ. 1997).

Disadvantages of the known decorative facing material consisting of two unlike layers, with an upper, face layer of glass pelletizer, reside in structural discontinuity and burnt mirror face, resulting in a reduction in physico-mechanical and thermal properties. Besides, a single mirror surface of the face layer, when lighted, gives rise to shines, thus affecting the aesthetic perception of the decorative facing material, and in case of using it to lay floor, leads to substantial slipping that makes such floor unsafe.

### Substance of the Invention

The technical problem solved by the invention consists in providing a method for continuous production of decorative facing slabs and a device for carrying out said method, which would eliminate the above-mentioned disadvantages of the methods and devices known at present, by reducing the temperature differences both in depth and over the surfaces of the slabs in the process of firing and thereafter, and also in providing a decorative facing material with improved physico-mechanical, thermal and aesthetic properties, hence enlarging the fields of its application and enhancing disigning capabilities of the decorative facing material.

The technical result is attained by that in the method for continuous production of decorative facing slabs based on colour glass pelletizer and refractory filler, the method including: loading basic materials into casting moulds, followed by thermal treatment in a furnace at a temperature of 900°C to 950°C to fuse, bake and crystallize them, and reducing the temperature prior to firing and a subsequent firing, the casting moulds are placed into an open heat-insulated pallet which, after the thermal treatment at a maximum temperature, is pushed out of the furnace and conditioned at an ambient temperature for as long as 80 to 90 seconds to cool the faces of the slabs down to 600-634°C, whereupon the slabs are placed into a closed, heat-insulated space having a thermal resistance of walls that ensures cooling down to 100-140°C at an average cooling rate of 0.016 to 0.020 deg/sec.

The technical result is also attained by that in the device for continuous production of decorative facing slabs based on colour glass pelletizer and refractory filler, the device comprising a bell furnace, casting moulds placed into heat-insulated pallets provided with heat-insulated covers forming, in contact with each other, a tight connection, a means for step-by-step conveying of the pallets, and a mechanism for forcing them against the bell furnace, is further provided with a manipulator for taking a cover off a pallet in which the slabs have undergone thermal treatment and putting it onto an open pallet leaving the bell furnace, and a set-point control means of the time interval when putting the cover onto the open pallet, the means for step-by-step conveying of the pallets is implemented in the form of a closed-loop open horizontal conveyor.

One of alternative embodiments of the invention provides for implementing the manipulator such that it comprises a trolley outfitted with a drive and capable of horizontal reciprocation, a frame having restricting guides and capable of reciprocation in a vertical direction, and a vertical motion drive.

Yet another alternative embodiment of the invention provides for implementing the manipulator such that it has rods with grips pivotally connected to the frame and to the vertical motion drive.

It is advisable to make the casting moulds for thermal treatment of the basic mixture from quartz ceramics.

A possible alternative embodiment of the invention provides for implementing such that the width of heat insulation around the perimeter of pallet is at least 5 times as large as the slab thickness.

It is advisable also to provide that the ratio between thermal resistances of heat insulation around the perimeter of pallet and at the centre thereof is 2.8 to 3.0.

The technical result for the third subject matter is attained by that the decorative facing material based on colour glass pelletizer and refractory filler, produced in accordance with granule-powder technology, by a baking method, followed by crystallization and burning, in the form of slabs with actively irregular internal surface has the slab face which is made irregular, with a maximum microroughness height of 27 to 1560 microns which is obtained directly in the process of thermal treatment. And, the face layer of material may contain 15 to 100 wt.% refractory filler and have a thickness of 1 mm to 20 mm, whereas the face of the same slab may simultaneously contain portions having different roughnesses.

As refractory filler, use can be made of quartz sand, alumina, granite aggregate with particle size of 0.15 mm to 1 mm.

In the claimed method for continuous production of decorative facing slabs based on colour glass pelletizer and refractory filler, a reduction in average cooling rate within the critical cooling zone by more than 5 times and in the process of further cooling by more than 30 times as compared against the known method has resulted in reduced temperature differences over the product thickness and in improved quality of firing, hence providing an increase in the yield of usable products.

It has been possible to accomplish this owing to that the casting moulds with the material are placed in the process of firing into a closed heat-insulated space, rather than carrying out the firing of the products in a tunnel furnace, with the heat insulation of the pallet walls and cover being selected appropriately in such a manner that no additional heat supply is required, i.e. without any additional expenditure of energy.

A reduction in the blank surface temperature, prior to firing, down to 600-634°C in the claimed method (in the most relevant state of technology, down to 650-700°C) at a rate almost 3 times that in the prior art has allowed to reduce the heat effect on the equipment, including also the pallets and covers, to prevent their deformation and thereby eliminate cold air reaching erratically a hot blank in the process of firing and reduce the temperature differences over the thickness and surface area of the products. Prevention of deformation of the pallets and covers reduces variable thickness differences and flatness errors of the blanks, thus improving quality of the slabs and increasing the percentage of usable products yielded. This also increases the service life of equipment.

The claimed device for continuous production of decorative facing slabs allows to reduce the temperature differences over the thickness and surface area of the products in the process of firing and thereafter, with a resulting improvement of firing and an increase in the percentage of usable products yielded.

Besides, the claimed device allows to reduce deformation of the pallets and covers, hence improving quality of firing and geometry of the slabs as well as extending the service life of equipment.

Use made of a manipulator in the claimed device to take a cover off a pallet in which the slabs have undergone thermal treatment and to put it onto an open pallet leaving the bell furnace, in combination with a set-point control means for setting the time interval, allows to cool quickly the product down to a desired temperature and to begin cooling of the product in a closed space from a lower controllable temperature so that it becomes possible, having selected an optimum cooling time, to reduce substantially the average rate at which the product is cooled both in the process of firing and thereafter, hence improving quality of firing.

Besides, use made of the manipulator and set-point control means for setting the time interval allows to avoid prolonged exposure of equipment and, in particular, metal arches of the covers to high temperatures, thus preventing their deformation and thereby eliminating cold air reaching erratically a hot blank in the process of firing and, hence, by reducing the temperature differences over the thickness and surface area of the product, to improve firing.

Implementation of the means for step-by-step conveying of the pallets in the form of a closed-loop open horizontal conveyor allows to avoid heating effects and reduce deformation of the pallets caused by both thermal and mechanical effects of the pallets upon each other, thus improving quality of firing and geometrical parameters of the products and thereby increasing the percentage of usable products yielded and extending the service life of equipment.

Making the casting moulds for thermal treatment of the basic materials from quartz ceramics allows to reduce additional cooling of the product edges and avoid influences of deformations and destructions of casting moulds during periodical thermal shocks when a casting mould leaves the heated bell furnace and gets into the shop environment, hence extending the service life of equipment.

Besides, a casting mould made of quartz ceramics has a minimum coefficient of thermal expansion and, as it gets cooled down together with the blank, its linear dimensions do not substantially decrease - a factor which allows to remove easily the blank out of the casting mould.

The width of heat insulation around the perimeter of pallet being 5 times as large as the slab thickness allows to reduce fringe effects and diminish cooling of the slab end faces, thereby improving firing. This effect becomes more pronounced if use is made of the ratio between thermal resistances of heat insulation around the perimeter of pallet and at the centre thereof that ranges from 2.8 to 3.0.

### Description of the Drawings

The invention will now be described in detail with reference to the accompanying drawings illustrating a specific embodiment thereof, in which:
Fig. 1 is a diagram showing how the temperatures of slab face change in the process of thermal treatment;
Fig. 2 is a schematic plan of the device for continuous production of decorative facing slabs;
Fig. 3 is a sectional view of the device along line III-III in Fig. 2;
Fig. 4 is a sectional view of the device along line IV-IV in Fig.2;
Fig 5 shows slabs made from the decorative facing material in accordance with the present invention; and
Figs. 6 and 7 are profilographs obtained during investigation of samples "1" and "2" produced in accordance with the present invention.

### Preferred Embodiment

The method for continuous production of decorative facing slabs is carried out as follows.

Preliminarily, homogeneously mixed and moistened components: colour glass pelletizer with particle size of 1.6 mm to 5 mm and refractory filler, are filled into preliminarily cleaned casting moulds onto a thin layer of quartz sand.

Four casting moulds thus prepared are placed into recesses in a heat-insulated pallet which is forced around the lower perimeter against the bell furnace preheated up to 900-950°C. In this position, the pallet is maintained for as long as 40 to 45 minutes.

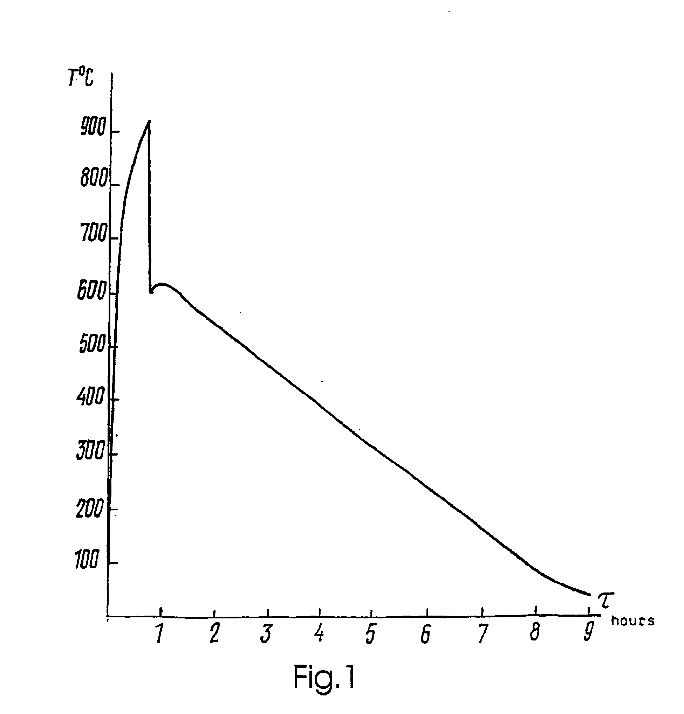

Fig. 1 is a diagram derived as a result of an experiment and showing how the temperatures of a slab face are changing in the process of thermal treatment.

For as long as 43 minutes, the basic materials are being heated up intensively in the quartz casting moulds. When in this position, the basic components get fused, baked and crystallized. After this, the heated pallet with the casting moulds is pushed out of the furnace into the environment and conditioned for as long as 80 to 90 seconds. As this takes place, the slab faces get cooled down to 600-634°C. At this temperature, the pallet is covered with a heat-insulated cover, thus placing the slabs into a closed, heat-insulated space. A thermal resistance of walls of the closed heat-insulated pallet should be selected in such a manner that the slab face would cool down therein to as low as 100 to 140°C at an average cooling rate of 0.016 to 0.020 deg/sec, while the cooling time in the closed heat-insulated space ranges from 7.5 to 7.8 hours.

As soon as the slab face cools down to 100-140°C, the cover is taken off the heat-insulated pallet, and the pallet is kept at an ambient temperature for as long as 1 to 1.2 hours. The total cooling time is 9 hours.

After the slab gets cool, it is subjected to machining at end faces thereof by a diamond tool to obtain a slab having precise geometrical dimensions. After machining, the slabs are inspected at the quality control department and sent to a stock room.

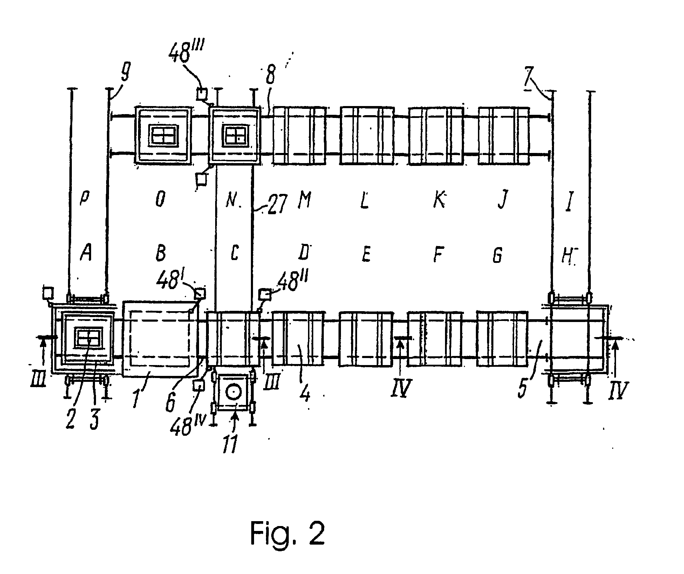

Fig. 2 shows the device for continuous production of decorative facing slabs, comprising a bell furnace 1, moulds 2 placed into heat-insulated pallets 3, some of which have heat-insulated covers 4. The device is provided with a means for step-by-step conveying of the pallets 3 toward the bell furnace 1, the conveying means being made in the form of a closed-loop open horizontal conveyor 5 and consisting of a forward-motion rail track 6, a switching rail track 7, a reverse rail track 8 and a loading rail track 9.

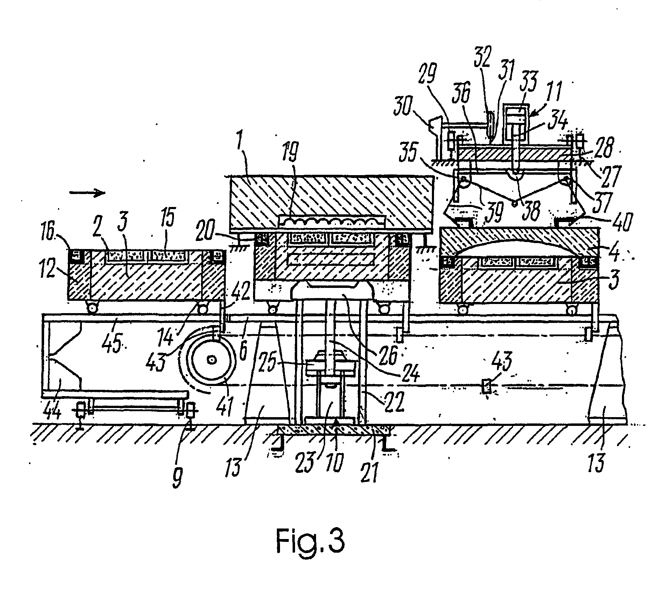

As shown in Fig. 3, the device is provided with a mechanism 10 for forcing the heat-insulated pallet 3 with the moulds 2 from the bottom to the bell furnace 1. The device is further provided with a manipulator 11 and a set-point control means (not shown) for setting the time interval when putting the heat-insulated cover 4 onto the open heat-insulated pallet 3.

A thermal resistance of heat insulation 12 around the perimeter of the pallet 3 is 2.8 to 3.0 times higher than a thermal resistance of heat insulation at the centre thereof.

Placed on the rail tracks of the conveyor 5 fastened to frames 13 are carriages 14. On each carriage 14 (Figs. 2, 3 and 4), a heat-insulated pallet 3 with moulds 2 of quartz ceramics is placed, with the basic components - colour glass pelletizer and refractory filler - having been placed inside the moulds. Around the perimeter of each pallet 3, grooves 16 (Fig. 3) are provided which are filled with a sealing material.

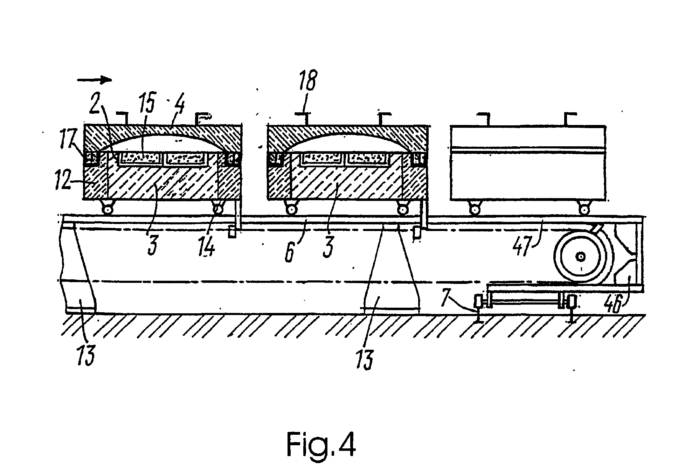

The forward-motion rail track 6, switching rail track 7, reverse rail track 8 and loading rail track 9 (Fig. 2) form the closed-loop open horizontal conveyor 5 with sixteen positions "A" to "P", the pallets 3 being closed with heat-insulated covers 4 in positions "D" to "G" and in positions "J" to "N" (Figs. 3 and 4).

Around its perimeter, each cover 4 is provided with featheredge seals 17 (Fig. 4), and within the upper portion of each cover 4 are fastened clamps 18 (Fig. 4).

In position "B" (Fig. 2), above the forward-motion rail track 6 is mounted the bell furnace 1 (Fig. 3) with electric heaters 19. The bell furnace 1 is provided with featheredge seals 20 at the bottom around the perimeter thereof.

Under the pallet 3 in position "B" (Fig. 3), on a bedplate 21 is mounted the mechanism 10 for forcing the pallet 3 against the bottom of the bell furnace 1. The mechanism 10 for forcing the pallet 3 thereto consists of a pump (not shown), guides 22, a hydraulic hoist cylinder 23, and a rod 24 with a sealing sleeve 25 and a pressure plate 26. To force the pallet 3 against the furnace, use can be made of mechanical arrangements provided with electric drives.

Above the line connecting positions "C" and "N" (Fig. 2), rails 27 (Figs. 2 and 3) are located, whereon the manipulator 11 is mounted for taking the cover 4 from the pallet 3 in which the slabs have undergone thermal treatment (position "N", Fig. 2) and putting it onto an open pallet 3 leaving the bell furnace 1 (position "C", Fig. 2).

The manipulator 11 comprises a trolley 28 (Fig. 3) mounted on wheels 29 for horizontal reciprocation over rails 27 and provided with a chain drive consisting of a motor 30, chain 31 attached to the trolley 28 and a driving sprocket 32. On the trolley 28, at the top thereof is fastened a cylinder 33 of a hydraulic drive with a rod 34, the trolley 28 being provided with an opening for the rod 34. Instead of the hydraulic drive, use can be made of an electric drive. To the bottom plane of the trolley 28 are attached restricting guides 35, whereon a frame 36 is mounted for reciprocation in a vertical direction, with pivots 37 fastened to its side faces. The frame 36 is provided with an opening for the rod 34, on the lower end of which a sleeve 38 having a pivot is fastened. The pivot of the sleeve 38 is kinematically connected by means of curved tie-rods 39 provided with grips 40 to the pivot 37 of the frame 36.

Each rail track - the forward-motion rail track 6, reverse rail track 8, loading rail track 9 and switching rail track 7 (Fig. 2) - is provided with a chain drive 41 (Fig. 3), wherein to the front wall of each carriage 14 is attached a plate 42, and to the chain drive 41 are attached the plates 43. On the loading rail track 9 (Fig. 2) is mounted for reciprocation a loading trolley 44 (Fig. 3) with an upper rail track 45, and on the switching rail track 7 (Figs. 2 and 4) is mounted for reciprocation a switching trolley 46 (Fig. 4) with an upper rail track 47. The device is provided with track switches 48 (Fig. 2) and a set-point control means for setting a time interval (not shown).

The device for continuous production of decorative facing slabs operates as follows.

Preliminarily, at all the position "A" to "G" and "J" to "O" (Fig. 2) on carriages 14 (Figs. 3 and 4) (a total of 13 pcs.) are mounted heat-insulated pallets 3 (a total of 13 pcs.). At the positions "D" to "G" (Fig. 2) and "J" to "N", the pallets 3 (Figs. 3 and 4) are closed with heat-insulated covers 4 (a total of 9 pcs.).

At the position "A" (Fig. 2), in a recess of the heat-insulated pallet 3 (Figs. 3 and 4) are installed moulds 2 of quartz ceramics filled with basic components 15: colour glass pelletizer and refractory filler. Subsequently, the moulds 2 are placed into recesses of all the pallets 3.

Using an automatic control system (not shown) or manually, the chain drive 41 (Fig. 3) is switched on, and by means of the plates 43 fastened thereto and plates 42 fastened to the front wall of each carriage 14 all the carriages 14 together with the heat-insulated pallets 3 that are on the forward-motion rail track 6 (Figs. 2, 3 and 4) are moved one step. The carriage 14 (Figs. 3 and 4) with the heat-insulated pallet 3 which was at the position "A" (Fig. 2), is moved to the position "B" and placed under the preheated bell furnace 1 with the electric heaters 19 (Fig. 3).

The chain drive 41, when moved one step, is stopped by a track switch 48' (Fig. 2). After this, the chain drives on the switching rail track 7 (Fig. 2), reverse rail track 8 and loading rail track 9 operate successively, and each carriage 14 with the pallet 3 around the entire closed-loop horizontal conveyor is moved one step forward. The chain drives on the switching track 7 and loading track 9 (Fig. 2) are reversible.

Unlike the movement of carriages 14 over the forward-motion and reverse rail tracks 6 and 8, respectively (Fig. 2), the movement of carriages 14 over the switching and loading rail tracks 7 and 9, respectively, is effected by means of the switching and loading trolleys 46 (Fig. 4) and 44 (Fig. 3), respectively, the process of movement coming to its end as soon as the upper rails 47 (Fig. 4) of switching trolley 46 are brought in alignment with the reverse rail track 8 (Fig. 2), and the upper rails 45 (Fig. 3) are brought in alignment with the forward-motion rail track 6 (Figs. 2, 3 and 4).

At the positions "O" or "P" (Fig. 2), the slabs are taken out of the moulds 2 (Fig. 3), and newly prepared moulds 2 with the basic mixture are placed into the pallet 3. These operations can be carried out also at the position "A".

Simultaneously with placing the carriage 14 (Figs. 3 and 4) with the heat-insulated pallet 3 and moulds 2 filled with the basic mixture 15 under the heated bell furnace 1 (Fig. 3), the track switch 48' (Fig. 2) switches on the chain drives on the switching track 7 and loading track 9 to return the trolley 46 (Fig. 4) from the position "I" to the position "H" (Fig. 2) and the trolley 44 (Fig. 3) from the position "A" to the position "P". In doing so, the track switch 48' (Fig. 2) switches on the pump (not shown) of the hydraulic hoist of the forcing mechanism 10 and, by means of the rod 24 (Fig. 3) with the pressure plate 26 fastened to its end, the heat-insulated pallet 3 and moulds 2 with the basic mixture 15 are lifted up and the upper portion of the heat-insulated pallet 3 is pressed around its perimeter against the bell furnace 1. As this takes place, the featheredge seals 20 of the bell furnace 1 arranged around its lower perimeter enter the grooves 16 arranged around the upper perimeter of the pallet 3 and filled with a sealing material.

Simultaneously with sealing the pallet 3 under the bell furnace 1, a contact switch (not shown) is switched on to initiate a time relay (not shown) which in 43 ± 1 minutes sends a command to switch on the pump (not shown) to cause lowering the forcing mechanism 10 down to its initial position (use can be made of an electric drive) . As the heat-insulated pallet 3 with moulds 2 is lowered down onto the carriage 14 mounted on the forward-motion rail track 6 (Figs. 2, 3 and 4), a contact switch (not shown) is operated to switch on the chain drive 41 (Fig. 3) and, by means of the plates 43 and 42, the carriages 14 together with the heat-insulated pallets 3 and moulds 2 are moved one step. The pallet 3 passes from the position "B" (Fig. 2) to the position "C". The chain drive 41 (Fig. 3), when moving one step (to the position "C" (Fig. 2)), is stopped by means of a track switch 48" (Fig. 2).

When the carriage 14 together with the heat-insulated pallet 3 and moulds 2 (Fig. 3) is at the position "C" (Fig. 2), the track switch 48" is operated to switch on the set-point control means for setting a time interval (not shown) and the reversible motor 30 (Fig. 3) of the manipulator 11. The chain 31 of the manipulator 11 that is rigidly connected to the upper plane of the trolley 28 of the manipulator 11 and driven by the sprocket 32 of the manipulator 11 and driven from the reversible motor 30, moves the trolley 28 of the manipulator 11, the wheels 29 of which are mounted on the rails 27 at a location above the position "N" (Fig. 2).

As the trolley 28 (Fig. 3) approaches the position "N" (Fig. 2), the track switch 48''' gets operated and switches on the pump (not shown) of the hydraulic hoist of the manipulator 11 and, by means of the rod 34 (Fig. 3) moved upwards and curved tie-rods 39 kinematically connected to the pivots of both the sleeve 38 and frame 37, retracts the grips 40 of the manipulator 11 beneath the clamps 18 (Fig. 4) fastened to the heat-insulated cover 4 (Fig. 4). As the rod 34 (Fig. 3) is moving further upwards, the frame 36 of the manipulator 11 is grasped by the sleeve 38 and moved upwardly up to the bottom surface of the trolley 28 of the manipulator 11. As soon as the frame 36 comes into contact with the bottom surface of the trolley 28, a contact switch (not shown) gets operated to switch on the reversible motor 30 of the manipulator 11. The chain 31 of the manipulator 11 moves, by means of the sprocket 32, the trolley 28 of the manipulator 11 along the rails 27 towards the position "C" (Fig. 2) and, by means of a track switch 48^{IV}, stops the manipulator 11 together with the cover 4 (Fig. 3) above the position "C" (Fig. 2).

The set-point control means for setting a time interval (not shown), having counted a predetermined time interval (80 to 90 seconds), sends a command to switch on the pump (not shown) of the hydraulic hoist of the manipulator 11, and the rod 34 (Fig. 3) of the manipulator 11 goes down. Together with the rod 34, the sleeve 38 and the frame 36 of the manipulator 11 mounted thereon are also moving downwards. The frame 36 of the manipulator 11 lowers down to the stops of the guides 35.

As this takes place, the heat-insulated cover 4 (Figs. 3 and 4) lowers onto the top portion of the heat-insulated pallet 3, and the featheredge seals 17 of the cover 4 enter the grooves 16 of the pallet 3 filled with a sealing material.

The rod 34 (Fig. 3) together with the sleeve having the pivot 38 continues to go down, and the curved tie-rods 37 together with the grips 40 of the manipulator 11 that are kinematically connected to the pivots 37 of the frame 36 and to the pivot 38 of the sleeve, are moved aside so that the grips 40 go from under the clamps 18 (Fig. 4) on the heat-insulated cover 4.

The process of delivering the heat-insulated pallet 3 with the moulds 2 beneath the electrical bell furnace 1 and further step-by-step movement of the pallets 3 on the carriages 14 at all the positions from "A" to "P" (Fig. 2) are successively repeated, like also repeated successively are the mechanized removal of the cover 4 by means of the manipulator 11 from the pallet 3 (Figs. 3 and 4) at the position "N" (Fig. 2) and laying it down some time later as predetermined by the set-point control means for setting a time interval, onto the pallet 3 at the position "C" (Fig. 2).

Due to a reduction in the temperature differences over the thickness and surface area of the slabs by more than two times, quality of firing is improved, hence improving the slab quality by reducing their variable thickness differences and flatness errors to thereby increase the percentage of usable products yielded by over 1.5 times.

A reduction in deformation of equipment and, first of all, pallets and covers due to lower thermal exposures and mechanical effects they endure, has allowed to prolong the service life of equipment by more than two times.

### EXAMPLE

The moulds of 330 x 430 mm in size that are made of quartz ceramics, are first cleaned of dust, dirt and stuck particles and then smeared inside with kaoline slip and dried.

A layer of quartz sand 2 mm thick and then a layer of mixture of colour glass pelletizer and refractory filler 20 mm thick (to produce a finished slab of 12 mm in thickness) and wetted to 4% moisture content are filled into a mould thus dried on the bottom, and the mixture is rammed.

In order to produce decorative facing slabs of light blue colour, use is made of colour glass pelletizer with the pellets of 1.6 mm to 5 mm in size and having the following chemical composition (wt.%): SiO₂ - 60.0; Na₂O - 16.8; CaO - 5.6; Al₂O₅ - 5.8; P₂O₅ - 9.1; NaNO₃ - 1.5; CuSO₄ - 0.8; CuO - 0.4.

Four such moulds with homogeneous mixture filled in are placed into a recess of a heat-insulated pallet. The pallet is then placed under an electrical bell furnace preheated to 930°C and pressed against it around its bottom perimeter.

In this position, the pallet is held for as long as 43±1 minutes. In the process of heating, the mixture gets fused, baked and crystallized.

After the thermal treatment of the mixture at a maximum temperature, the pallet is pushed out of the furnace in a horizontal direction into the shop environment having a temperature of 20 to 30°C. Pushing the heated pallet out of the furnace in a horizontal direction prevents additional heating effect of the furnace on the slabs, thus ensuring a maximum cooling rate, when cooling the slabs down to 600-634°C. Besides, this also eliminates uncontrollable heating effect of the pallets on each other (this effect would take place if the pallet is pushed out not in a horizontal direction) and mechanical influence of them upon each other.

At the ambient temperature, the pallet is kept for as long as 80 to 90 seconds, and the slab surfaces get cooled down to 600-634°C. If the pallet with the slabs is kept at the ambient temperature longer than 90 seconds, the slabs would cool below 600°C, but this is dangerous for the slabs because of emergence of residual stresses in the slabs. A reduction in the cooling time at the ambient temperature to less than 80 seconds leads to an increase in the surface temperature of the slabs, and this in turn increases the cooling rate at which the slabs are cooled in the process of firing and the heat load on the metal screen of the heat-insulated cover of the pallet (after the pallet is closed with the cover) because of a higher temperature of the slab and a longer time of exposure. Overheating of the cover screen leads to its deformation and uncontrollable drawing of cold air to the heated slab, resulting in poorer quality of firing and shorter service life of equipment.

After the slabs are kept for as long as 80 to 90 seconds at the ambient temperature, the pallet with the heated slabs is covered with a heat-insulated cover, thereby placing the slabs into a closed heat-insulated space. This closed heat-insulated space has such thermal resistance of its walls which ensures an average cooling rate of the slabs, when cooled from 600-634°C to 100-140°C, of 0.016 to 0.020 deg/sec (the cooling time of the slabs then being 7.5 to 7.8 hours). As soon as the slabs cool down to 100-140°C, the heat-insulated cover is taken off the pallet, and then the pallet is kept at an ambient temperature for as long as 1 to 1.2 hours. The total cooling time of the slabs reaches as long as 8.5 to 9 hours.

The experiments have shown that at this average rate of cooling the slabs, the percentage of usable products yielded increases by 1.5 times. A shorter time of exposure of equipment and, first of all, covers and pallets to high temperatures and elimination of mechanical effects of the pallets on each other have extended the service life of equipment by as much as two times.

The decorative facing material is produced as follows.

Premixed and wetted components - colour glass pelletizer and refractory filler, for instance, quartz sand, which form a homogeneous mixture of uniformly distributed particles in a mixer - are filled into preliminarily cleaned moulds onto a thin layer of quartz sand as a homogeneous layer.

The quantity of refractory filler, for instance, quartz sand, in the face layer of the decorative facing material may vary from 15 to 100 wt.%, with the thickness of the face layer being 1 mm to 20 mm.

In one of alternative embodiment, all the face area of the homogeneous mixture of colour glass pelletizer and quartz sand is additionally coated with a uniform layer of refractory filler, for instance, quartz sand.

In another embodiment, only some sections of the face of the homogeneous layer are additionally coated with a uniform layer of quartz sand, using a stencil.

As refractory filler, use can be made of quartz sand, alumina, granite aggregate with particle size of 0.15 mm to 1 mm.

The moulds are placed in a recess of the heat-insulated pallet which is brought in contact with the bottom of and pressed around the perimeter thereof against an electrical bell furnace preheated to 900-950°C.

After fusing, baking and crystallization which occur in the basic material, when held under the bell furnace for as long as 40 to 45 minutes, the pallet with the moulds is taken away from under the bell furnace and closed with a heat-insulated cover. In the space thus closed, the blank is fired and cooled down to a room temperature.

After the slabs of decorative facing material get cooled down, they are removed out of the moulds, and the end faces of the slabs are subjected to machining in order to obtain precise overall dimensions of the slabs.

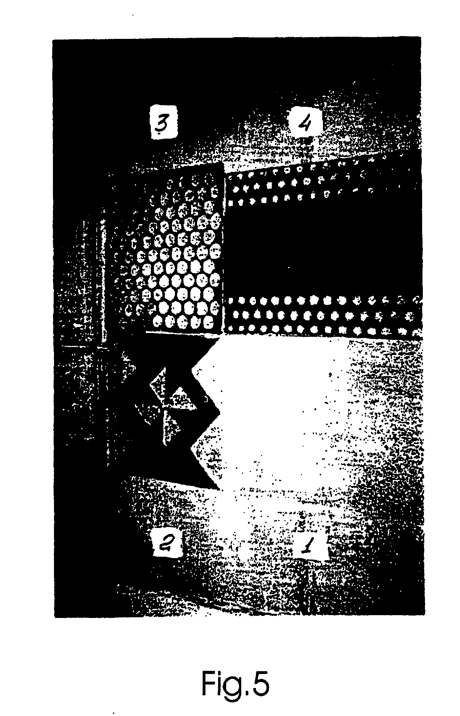

### Example No. 1 (Fig. 5, Ref. Nos. 2 and 4, black sections)

Preliminarily prepared colour glass pelletizer (chemical composition and coefficients of linear thermal expansion are given in Table No. 1) with pellet size of 1.6 mm to 5.0 mm and quartz sand (percentages in the mixture are indicated in Table No. 1) with particle size of 0.15 mm to 0.4 mm are loaded into tared vessels; a hopper-type container for glass pelletizer (capacity 150 kg) and a container for quartz sand (capacity 40 kg). The quantity of quartz sand by weight in the decorative facing material was 22.5 kg.

Preliminarily, the mixer, use has been made of SBR-200 concrete mixer, is supplied with a dosed quantity of glass pelletizer which is wetted to have a moisture content of up to 4 percent and then mixed for as long as 5 minutes (prior to turning on, the concrete mixer window is tightly closed).

Next, a measuring vessel is used to load quartz sand therein, followed by additional mixing for 10 minutes more until a homogeneous mixture is obtained with uniformly distributed particles of glass pelletizer and quartz sand.

Prior to filling the homogeneous mixture into the moulds, the latter are cleaned thoroughly of dust, dirt and stuck pellets, and the internal walls of the moulds are smeared with kaoline slip.

After drying, a layer of quartz sand 2 mm thick is placed onto the mould bottom. After this, the mould is filled with a homogeneous layer 20 mm thick of the mixture of uniformly distributed particles of glass pelletizer and quartz sand (to obtain finished slabs 12 mm thick).

After the four moulds thus prepared and filled with the basic mixture are placed in the heat-insulated pallet, the latter is brought in contact with the bottom of a preheated electrical bell furnace and pressed against it. The temperature in the bell furnace is set equal to 930°C, and the exposure time, 43±1 minute. After the heat treatment in the process of which the mixture is fused, baked and crystallized, the pallet with the moulds is taken away from under the bell furnace and closed with a heat-insulated cover.

In this condition, the pallet is held together with the moulds and cover for as long as 7.5 to 7.8 hours during which time both firing and cooling take place. After this, the heat-insulated cover is taken off, and the slabs of decorative facing material are cooled down to the ambient temperature. After cooling, the slabs are removed out of the moulds, and the end faces of the slabs are subjected to machining in order to obtain slabs having precise dimensions of 300 x 400 x 12 mm.

### Example No. 2 (Fig. 5, Ref. No. 1)

All the operations are carried out as in Example No. 1, but prior to placing the moulds into the recess of the heat-insulated pallet, the entire face of the homogeneous layer of the mixture of colour glass pelletizer and quartz sand is additionally coated with a uniform layer of quartz sand 1 mm to 3 mm thick. After baking, the excess of quartz sand is easily removed from the upper layer by a stiff brush. As a result, a rough surface layer is formed which contains 100 wt.% quartz sand and is fused into glass pelletizer.

### Example No. 3 (Fig. 5, Ref. Nos. 2, 3 and 4, grey sections)

All the operations are carried out as in Example No. 1, but prior to placing the moulds into the recess of the heat-insulated pallet, some sections on the face of the homogeneous layer of the mixture of colour glass pelletizer and quartz sand are additionally coated with a uniform layer of quartz sand by means of a stencil. As a result, the quantity of quartz sand at various areas of the face will range from 15 to 100 wt.%.

Table 1 gives the composition of green glass pelletizer, with the content of quartz sand in the basic mixture being 15.0 wt.%.

From Table 1, it is seen that the single-layer decorative facing material produced in this example has a coefficient of linear thermal expansion equal to 102.5·10⁻⁷ 1/°C and differing from the coefficient of linear thermal expansion of concrete (Kuazis, A.P., "Reinforced-Concrete and Stone Structures", M., 1998, p.30) by no more than ±2.5%, hence ensuring a monolithic structure of decorative facing material and concrete, and this in turn improves the performance (service life) of the claimed decorative facing material on concrete.

It has been established how the surface roughness depends upon the preliminary thickness of a layer of quartz sand on the slab surface and upon the pellet size of glass pelletizer. The thicker the layer of quartz sand thus applied and the larger the particles of glass pelletizer, the rougher is the face of decorative facing material.

Maximally, the roughest surface we have been able to provide for the face of decorative facing material, has roughness Rₘₐₓ 1560 (GOST 2789-73), i.e. investigation of slab faces, using a universal measuring microscope, has given the height "H" of roughness profile or the distance between the uppermost and the lowermost points of the surface of samples equal to 1560 microns.

The maximum roughness of the face of the known two-layer decorative facing material with a face layer made of glass pelletizer ("glass expanded-silica") and having a mirror-shine surface (Sample "No. 1"), i.e. the most relevant prior art material, has been investigated, using a surface roughness recorder-indicator Model 252.

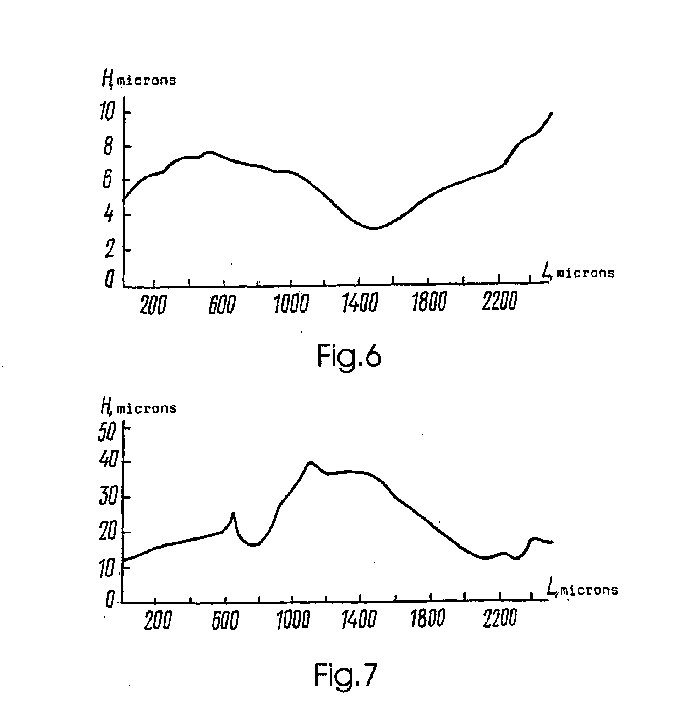

The profilographs resulting from the investigation of Sample "No. 1" are presented in Fig. 6 with a vertical magnification of 5000 and a horizontal magnification of 50.

The maximum roughness height of the mirror surface was 6.4 microns.

**Table 1**

| Composition of colour glass pelletizer - components | Composition of green-colour glass pelletizer (wt.%) |
|---|---|
| SiO₂ | 66.3 |
| B₂O₃ | 1.5 |
| K₂O | 5.4 |
| Na₂O | 18.5 |
| MgO | 2.0 |
| CaO | 0.7 |
| Cr₂O₃ | 1.0 |
| F₂ | 4.6 |
| Coefficient of linear thermal expansion of colour glass pelletizer x 10⁻⁷ 1/°C | 101 |
| Content of quartz sand in the mixture (wt.%) | 15 |
| Coefficient of linear thermal expansion of decorative facing material x 10⁻⁷ 1/°C | 102.5 |

Fig.7 shows profilographs of Sample No. 2 (Example No. 1) (black sections in Fig. 5, Ref. No. 2). The maximum roughness height of the mirror face was 27 microns. In this case, the slabs had a dull (with diffused scattering of light) surface slightly rough to the touch. Mirror lustre was actually absent. As to their finish, the slabs produced from a homogeneous mixture based on black glass pellets mixed with quartz sand (15 wt.%) approached to natural granite "gabbro".

The decorative facing material produced from a homogeneous mixture of flashed white glass pelletizer mixed with quartz sand (15 wt.%) approaches, as to its finish, to natural white marble.

Fig. 5 (Ref. Nos. 2, 3 and 4) shows example No. 3 when only some surface areas of the formed slab were coated, using a stencil, with a uniform layer of quartz sand (100 wt.%), prior to baking and crystallization. After baking, the excess of quartz sand was easily removed from the upper (stencilled) layer by a stiff brush. As a result, a pattern combined of the areas having various roughnesses was obtained on the surface.

Fig. 5 shows also a stone mat (Ref. No. 3) and a stone track (Ref. No. 4).

In a similar manner, steps with a rough strip as well as wall and floor design elements have been produced.

Table 2 gives comparative physico-mechanical, thermal and performance properties of the claimed single-layer decorative facing material and known two-layer decorative facing material ("glass expanded-silica").

**Table 2**

| Item Nos. | Characteristic | Unit of measurement | Most relevant prior art two-layer decorative facing material ("glass expanded-silica") | Claimed single-layer decorative facing material |
|---|---|---|---|---|
| 1 | Density | g/cm³ | 2.4 (4) | 2.42 |
| 2 | Water absorption | % | 0.24 (3) | 0.13 |
| 3 | Compression strength | kg/cm² strength | 260 (3) | 320 |
| 4 | Coefficient of linear thermal expansion | x 10⁻⁷ 1/°C | 116-124 (4) | 97.5-102.5 |
| 5 | Thermal stability | °C | 300 (4) | 450 |
| 6 | Abradability | g/cm² | 0.81 (1) | 0.06 |

| | | | | |
|---|---|---|---|---|
| *(1) (USSR Inventor's Certificate No. 1806107, Cl. C03C 14/00, publ. 1993) | | | | |
| (3) (USSR Inventor's Certificate No. 546569, Cl. C03B 5/00, publ. 1974) | | | | |
| (4) (Bykov, A.S., "Glass Expanded-Silica. Technology of Application in Civil Engineering", M., 1994, pp.76 and 81) | | | | |

From Table 2, it follows that the decorative facing material disclosed in the claimed invention, which is a single-layer material throughout the entire thickness thereof and has uniformly distributed components - colour glass pelletizer and refractory filler - with the content of the latter from 15 to 100 wt.% and various roughness of its face, represents such a material which does not delaminate, reflects diffusely the light beams, does not slip, and in its characteristics is superior to the known two-layer decorative facing material "glass expanded-silica": in compression strength, 1.23 times; in thermal stability, 2.1 times; in water absorption, 1.85 times; and in abradability, 13.5 times.

### Industrial Applicability

The present invention can be used in civil and industrial engineering and, in particular, for facing external and internal walls of buildings, as a fooring, and also in furniture industry and, in particular, for production of table-boards, for making durable artistic articles and the like.

## Claims

1. A method for continuous production of decorative facing slabs based on colour glass pelletizer and refractory filler, said method including: loading basic components into casting moulds, followed by thermal treatment in a furnace at a temperature of 900°C to 950°C to fuse, bake and crystallize them, and then reducing the temperature prior to firing and subsequent firing, **characterized in that** said casting moulds are placed into an open heat-insulated pallet which, after the thermal treatment at a maximum temperature, is pushed out of said furnace and conditioned at an ambient temperature for as long as 80 to 90 seconds to cool the faces of said slabs down to 600-634°C, whereupon said slabs are placed into a closed, heat-insulated space having a thermal resistance of walls that ensures cooling the faces of said slabs down to 100-140°C at an average cooling rate of 0.016 to 0.020 deg/sec.

2. A device for continuous production of decorative facing slabs based on colour glass pelletizer and refractory filler, said device comprising: a bell furnace, casting moulds placed into heat-insulated pallets provided with heat-insulated covers forming, when in contact with each other, a tight connection, a means for step-by-step conveying of the pallets, and a mechanism for forcing said pallets to said bell furnace, **characterized in that** said device is further provided with a manipulator for taking said cover off said pallet in which said slabs have undergone thermal treatment and for putting said cover onto the open pallet just leaving said bell furnace, and a set-point control means for setting the time interval when to put said cover onto said open pallet, said means for step-by-step conveying of said pallets being implemented in the form of a closed-loop open horizontal conveyor.

3. The device according to claim 2, **characterized in that** said manipulator comprises a trolley provided with a drive and capable of horizontal reciprocation, a frame having restricting guides and capable of reciprocation in a vertical direction, and a vertical motion drive.

4. The device according to claim 2 or 3, **characterized in that** said manipulator further comprises curved tie-rods with grips which are pivotally connected to said frame and to said vertical motion drive.

5. The device according to claim 2, **characterized in that** said casting moulds for the thermal treatment of a basic mixture are made from quartz ceramics.

6. The device according to any one of claims 2 or 5, **characterized in that** the width of heat insulation around the perimeter of said heat-insulated pallet is at least 5 times as large as the thickness of said slabs.

7. The device according to any one of claims 2, 5 or 6, **characterized in that** the ratio between thermal resistance of heat insulation around the perimeter of said heat-insulated pallet and at the centre thereof is 2.8 to 3.0.

8. A decorative facing material based on colour glass pelletizer and refractory filler, produced in accordance with granule-powder technology, by a baking method with subsequent crystallization and burning, in the form of slabs with actively irregular internal surface, **characterized in that** the face of said slabs is made such that it is irregular, with a maximum microroughness height of 27 to 1560 microns which is obtained directly in the process of thermal treatment.

9. The material according to claim 8, **characterized in that** the face of the same slab simultaneously contains areas having different roughnesses.

10. The material according to claim 8 or 9, **characterized in that** the face layer of said material contains 15 to 100 wt.% refractory filler.

11. The material according to any one of claims 8 to 10, **characterized in that** said face layer has a thickness of 1 mm to 20 mm.

12. The material according to any one of claims 8 to 11, **characterized in that**, as said refractory filler, use is made of quartz sand, alumina, granite aggregate with particle size of 0.15 to 1 mm.

## Amended claims

### Amended claims under Art. 19.1 PCT

**1.** In accordance with the specification of the invention (p.5, lines 13-15), one of the main technical problems solved by the invention consists in providing a decorative facing material with improved physico-mechanical and aesthetic properties, i.e., producing a decorative facing material, the face of which has various surface irregularity (p.34, lines 6-7).
This is ensured, on the one hand, by that the mould is filled with a homogeneous layer (p.25, lines 26-27) of a mixture with uniformly distributed particles of glass pelletizer and quartz sand (p.25, lines 17-20) and, on the other hand, by that the mixture is subjected to thermal treatment at 930°C (p.21, lines 25-28) and then sharply cooled to ensure a maximum cooling rate while cooling the slabs down to 600-634°C (p.22, lines 9-10). As a result, a rough surface layer is formed (p.26, line 27).
In the process of thermal treatment, the mixture is fused, baked and crystallized. From 800°C and up to 930°C, formation of crystallization zones connected with each other by vitreous (amorphous) zones takes place around crystalline particles of quartz sand.
During a slow reduction in temperature from 930°C to 630°C, the grains of quartz sand together with the crystallization zones sink down into the molten material and, during the subsequent thermal treatment, the surface of the slabs becomes mirror-lustrous.
During a sharp reduction in temperature from 930°C to 630°C over 80 to 90 seconds, the particles of quartz sand get fixed in the face layer on the surface of the material together with the crystallization zones, thus ensuring that a rough face is obtained on the slabs.
In view of the aforesaid, the Applicant suggests to amend claim 1 (p.32, line 13) by adding after the words "the faces of said slabs down to 600-634°C", a phrase "thereby forming a surface irregular layer". This amendment adds nothing new to the file record and is completely substantiated by the specification.

**2.** In the specification, the suggested amended to the claims can be reflected as follows:
a) p.6, line 2, after the words "down to 600-634°C", add "thereby forming a surface irregular layer";
b) p.26, line 7, after the words "the exposure time, 43±1 minute", add "In the process of thermal treatment, the mixture is fused, baked and crystallized. From 800°C and up to 930°C, formation of crystallization zones connected with each other by vitreous (amorphous) zones takes place around crystalline particles of quartz sand.
During a slow reduction in temperature from 930°C to 630°C, the grains of quartz sand together with the crystallization zones sink down into the molten material and, during the subsequent thermal treatment, the surface of the slabs becomes mirror-lustrous.
During a sharp reduction in temperature from 930°C to 630°C over 80 to 90 seconds, the particles of quartz sand get fixed in the face layer on the surface of the material together with the crystallization zones, thus ensuring that a rough face is obtained on the slabs."

**3.** Thus, the Applicant disagrees on that the requirement of one invention in one application has been infringed in the pending application. On the contrary, in the Applicant's opinion, claims 1, 2 to 7, and 8 to 12 are associated with each other by a single common inventive concept - providing a decorative facing material, the face of which has various surface irregularity (p.34, lines 6-7), because only the claimed method for continuous production of decorative facing slabs, wherein the material is cooled in 80 to 90 seconds from 930°C to 630°C, allows to produce the decorative facing material, the face of which has various surface irregularity.

The indispensable conditions for production of the decorative facing material with an irregular face include, besides providing a filler layer on the face, also a sharp (for 80 to 90 seconds) cooling of the material down from 930°C to 630°C (which is one of the main features of the method) in order to fix the crystallization zones formed on the surface of the decorative facing material and make it impossible for them to sink down into the molten material, thus ensuring that a rough face is obtained.

And, finally, in order to sharply cool the decorative facing material down from 930°C to 630°C, i.e., to fix the crystallization zones and obtain a rough face, it is necessary to provide a means for step-by-step conveying of pallets, manipulator and pallet covers as well as a set-point control means for setting the time interval (which are the main features of the device).

Thus, in the Applicant's opinion, claims 1, 2 to 7, and 8 to 12 are associated with each other by a single common inventive concept, and the requirement of one invention in one application has been complied with in the pending application.
